Europäisches Patentamt

European Patent Office

Office européen des brevets

(19)

(11) Veröffentlichungsnummer: **0 065 659**
**B1**

(12) **EUROPÄISCHE PATENTSCHRIFT**

(45) Veröffentlichungstag der Patentschrift:
31.07.85

(51) Int. Cl.⁴: **B 23 B 29/04**

(21) Anmeldenummer: 82103528.4

(22) Anmeldetag: 27.04.82

(54) Schnellwechselwerkzeughalter, insbesondere für Drehmaschinen.

(30) Priorität: 21.05.81 DE 8115135 U

(43) Veröffentlichungstag der Anmeldung:
01.12.82 Patentblatt 82/48

(45) Bekanntmachung des Hinweises auf die Patenterteilung:
31.07.85 Patentblatt 85/31

(84) Benannte Vertragsstaaten:
AT CH FR GB IT LI

(56) Entgegenhaltungen:
EP - A - 0 010 074
CH - A - 249 179
DE - A - 1 917 193
DE - A - 2 330 636
DE - U - 8 115 135
FR - A - 1 420 480
US - A - 3 224 304

MACHINES PRODUCTION, nr. 287, 14. April 1981,
Boulogne, "Blocs-outils: Système d'outils simplifiant le
changement automatique", Seiten 15,17,18

(73) Patentinhaber: BENZ GmbH Werzeug- und
Maschinenbau KG, D-7612 Haslach (DE)

(72) Erfinder: Schaeffer, Heinz, Tannenstrasse 16,
D-7612 Haslach (DE)

(74) Vertreter: Magenbauer, Rudolf, Dipl.-Ing. et al,
Patentanwälte Dipl.-Ing. Rudolf Magenbauer Dipl.-Phys.
Dr. Otto Reimold Hölderlinweg 58, D-7300 Esslingen (DE)

## Beschreibung

Die Erfindung betrifft einen Schnellwechselwerkzeughalter, insbesondere für Drehmaschinen, der einen an der Maschine anzubringenden Schaft und einen an diesem lösbar befestigten Kopf besitzt, an dem der Werkzeugeinsatz, z. B. ein Schneideinsatz, auswechselbar angebracht ist und der an der zugehörigen Stirnfläche des Schaftes unter mehrseitigem Formschluß anliegt und mit dem Schaft durch Kraftschluß lösbar verbunden ist, zweckmäßigerweise mechanisch, hydraulisch, pneumatisch oder elektrisch zusammenspannbar ist, indem in einer Längsbohrung des Werkzeughalterschaftes ein Spannbolzen in axialer Richtung hin und her verstellbar und feststellbar geführt ist, an dessen dem Kopf abgewandten Ende die Betätigungsorgane zur Erzeugung der Verstellbewegung des Schaftes angreifen und dessen anderes Ende an dem dem Kopf zugewandten Ende des Schaftes vorsteht und als Formstück ausgebildet ist, das bei zusammengebautem Werkzeughalter in einer entsprechend gestalteten Aufnahme an dem dem Schaft zugewandten Endbereich des Kopfes sitzt, wobei zur Herstellung des Formschlusses die dem Kopf zugewandte Stirnfläche des Werkzeughalterschaftes zueinander konvergierende Teilfächen besitzt, denen eine entsprechende Anzahl von korrespondierenden Gegenflächen an der dem Schaft zugewandten Stirnfläche des Kopfes zugeordnet ist.

Bekannte Wechselwerkzeuge haben verschiedene Nachteile: Bei Anordnungen, bei denen das Werkzeug in einen Wechselteil eingespannt ist, ergibt sich ein das Hantieren mit diesen Anordnungen auf die Dauer außerordentlich stark erschwerendes hohes Gewicht, zum Teil 3 bis 5 bis 7 Kilo, je nach eingespanntem Werkzeug, der Materialaufwand ist relativ hoch, außerdem ist das Wechseln des Werkzeugs umständlich und schwierig, so daß insgesamt die Wirtschaftlichkeit nicht allzu hoch ist. Bei anderen bekannten Werkzeugen mit auswechselbaren Köpfen sind Nachteile hinsichtlich der Stabilität und auch der Wirtschaftlichkeit vorhanden, außerdem sind diese Halter nicht immer anwendbar, z. B. beim Bohren, Reiben, Innendrehen, Gewindeschneiden, da sich in vielen Anwendungsfällen bei den vorgenannten Arbeitsoperationen die recht große Ausladung nachteilig bemerkbar macht. So z. B. ist aus der CH-PS 2 49 179 ein Schneidwerkzeughalter mit mehreren Schnittwerkzeugeinsätzen mit den Merkmalen aus dem Oberbegriff des Anspruchs 1 bekanntgeworden, bei dem jedoch infolge der besonderen Gestaltung des Formstücks am Schaft und an der zugehörigen Aufnahme, sowie der zum Herstellen des Formschlusses aneinander anliegenden Stirnfläche des Schaftes und des Kopfes die Wechselgenauigkeit beeinträchtigt ist, weil an der Spannstelle zwischen Schaft und Kopf evtl. eine elastische Verformung stattfinden kann und die Auflageflächen anfällig für Verschmutzung sind. Außerdem baut diese Anordnung relativ hoch, so daß sie bei Revolverköpfen nicht immer angewendet werden kann. Die obigen Ausführungen treffen im übrigen im wesentlichen auch für die Anordnung nach der EP-A1-00 10 074 zu.

Das Ziel der vorliegenden Erfindung besteht demgegenüber darin, hier Abhilfe zu finden, und einen Schnellwechselwerkzeughalter der hier in Frage stehenden Art zu schaffen, der stabil und wirtschaftlich ist, mit dem leicht hantiert werden kann und der ein großes Anwendungsgebiet und viele Einsatzmöglichkeiten gibt.

Zu dem obengenannten Zweck ist gemäß der Erfindung bei der neuen Anordnung vorgesehen, daß die dem Kopf zugewandte Stirnfläche des Schaftes des Werkzeughalters zwei Paare von konvergierenden Teilflächen aufweist, die jeweils einen zum Kopf hin vorstehenden, sich rechtwinklig zur Schaftlängsachse über die gesamte Schafthöhe erstreckenden spitzwinkligen Vorsprung mit einem Querschnitt in Gestalt eines gleichschenkligen Dreiecks bilden, daß das Formstück am Spannbolzen ein im Querschnitt etwa T-förmiges Gebilde darstellt und die zugehörige Aufnahme im Kopf im Querschnitt ebenfalls etwa T-förmig ist, wobei ihre zum Schaft hin offene Partie dem Steg des T entspricht und daß die die Aufnahme bildende T-förmige Nut an der Oberseite des Kopfes durch eine Wand abgeschlossen ist.

Gegenüber dem Stand der Technik ergeben sich beim Erfindungsgegenstand wichtige Vorteile: Infolge der besonderen Verzahnung zwischen den Anlageflächen des Schaftes und des Kopfes ergibt sich ein sattes, genaues und unverrückbares Zusammenpassen der beiden miteinander zu verbindenden Teile Schaft und Kopf, also große Kompaktheit und Stabilität, die Verschmutzungsgefahr ist aufgehoben bzw. verringert. Außerdem baut der erfindungsgemäße Werkzeughalter nicht hoch, so daß er auch in Revolverköpfen eingesetzt werden kann. Die erfindungsgemäße Anordnung hat ein wesentlich geringeres Gewicht als manche vergleichbaren Anordnungen nach dem Stand der Technik, bei denen das Werkzeug in einem Wechselteil eingespannt ist, außerdem ergibt sich gegenüber Werkzeugen aus einem Stück eine hohe Materialersparnis. Das Auswechseln ist einfach und kann leicht bewerkstelligt werden, da nur der Kopf gewechselt werden muß, so daß insgesamt eine hohe Wirschaftlichkeit gegeben ist.

Vorzugsweise kann der Spannbolzen aus einem Betätigungsende und einer mit diesem verschraubten, das Formstück tragenden Partie bestehen und als Differenzgewindestück ausgebildet sein, an dem das Betätigungsende mit Außengewinde versehen und in einer Gewindepartie der Aufnahmepartie des Werkzeughalterschaftes hin und her schraubbar geführt ist und außerdem an der dem Kopf zugewandten Seite eine Sackbohrung mit einem Innengewinde mit einer von derjenigen des Außengewindes verschiedenen Steigung aufweist, in die das mit entsprechendem Außengewinde versehene Ende der das Formstück tragenden Partie eingeschraubt ist, derart, daß bei Verdrehen der aus dem Werkzeughalterschaft herausstehenden Partie des Betätigungsendes das Formstück am anderen Spannbolzenende axial verstellbar ist. Die Anordnung kann z. B. aber auch so getroffen sein, daß dem Werkzeughalterschaft eine von außen zu betätigende Spannschraube zugeordnet ist, deren Längsachse rechtwinklig zur Schaftlängsachse verläuft und deren konisch zulaufendes freies Ende mit entsprechend verlaufenden, symmetrisch mit Bezug auf die Schraubenlängsachse vorgesehenen konischen Gegenflächen einer Ausnehmung am Spannbolzen zusammenwirkt, derart, daß bei Niederschrauben der Spannschraube eine axiale Verstellbewegung des Spannbolzens erzeugt wird. Es ergeben sich auf diese Weise einige besonders zweckmäßige Möglichkeiten zum einfachen Hantieren beim sicheren Spannen des Werkzeugs.

Es kann z. B. auch vorgesehen sein, daß am Kopf unmittelbar der als Schneideinsatz ausgebildete Werkzeugeinsatz befestigt ist oder daß zwischen dem Kopf und dem Werkzeugeinsatz ein Träger zwischengeschaltet ist, dessen mit der Achse des Werkzeugeinsatzes zusammenfallende Achse rechtwinklig zur Achse des Werkzeughalterschaftes verläuft. Hieraus ergibt sich, daß der Erfindungsgegenstand besonders vielseitig angewendet werden kann.

In der Zeichnung sind Ausführungsbeispiele des Gegenstandes der Erfindung dargestellt. Es zeigt

Fig. 1 eine erste Ausführungsform des Gegenstandes der Erfindung, bei der der Werkzeughalterschaft und der Kopf voneinander getrennt dargestellt sind, etwa nach Art einer explodierten Darstellung, in einer Seitenansicht, teilweise geschnitten,

Fig. 2 die Anordnung nach Fig. 1 in Richtung des Pfeiles I gesehen,

Fig. 3 eine zweite Ausführungsform des Gegenstandes der Erfindung in derselben Darstellungsweise wie in Fig. 1,

Fig. 4 die Anordnung nach Fig. 3 in einer Ansicht gemäß Pfeil II der Fig. 3,

Fig. 5a und 5b Beispiele für verschiedene Anwendungsmöglichkeiten des Erfindungsgegenstandes in Seitenansicht in schematischer Darstellung.

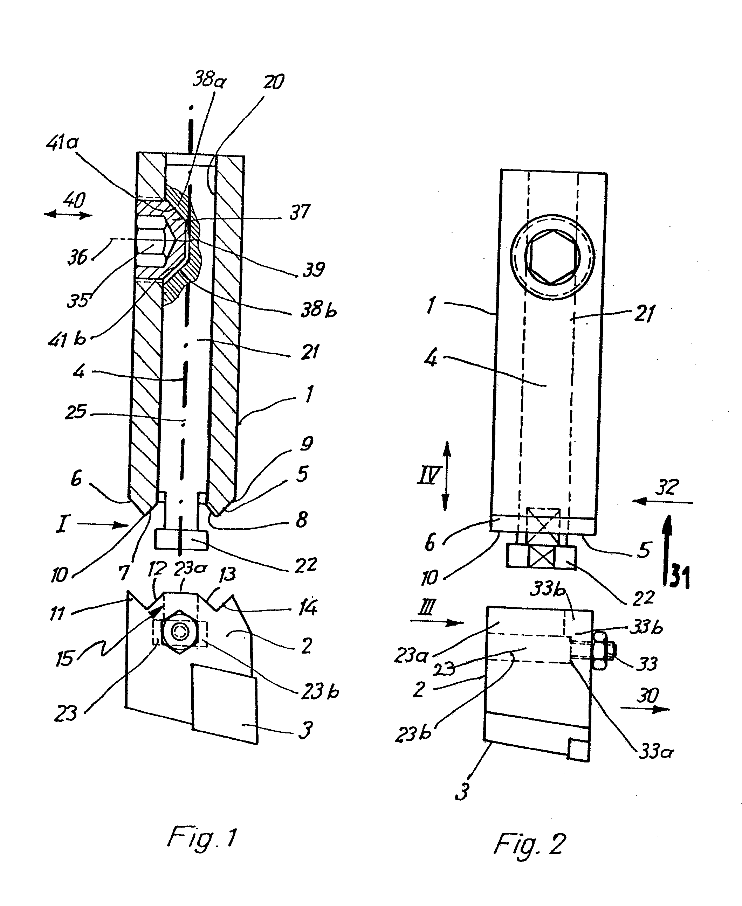

Der in der Zeichnung dargestellte erfindungsgemäße Schnellwechselwerkzeughalter, der sich insbesondere für die Benutzung in Drehmaschinen eignet, besitzt einen an der Maschine anzubringenden Schaft 1, der im folgenden als Werkzeughalterschaft bezeichnet wird, und einen an diesem Schaft lösbar befestigten Kopf 2, an den der Werkzeugeinsatz 3, z. B. ein Schneideinsatz, wie er in Fig. 1 und 2 dargestellt ist, auswechselbar angebracht ist. Erfindungsgemäß liegt der Kopf 2 an der zugewandten Stirnfläche des Schaftes unter mehrseitigem Formschluß an, wobei er mit dem Schaft durch Kraftschluß lösbar verbunden ist, zu welchem Zweck der Werkzeughalterschaft mit dem Kopf mechanisch, hydraulisch, pneumatisch oder elektrisch zusammenspannbar ist. Hierbei ist die Anordnung so getroffen, daß der Kopf von der Seite her in Richtung rechtwinklig zur Schaftlängsachse 4, also in Richtung des Pfeiles III, an den Schaft zur formschlüssigen Anlage an dessen zugewandter Stirnseite ansetzt und zur Herstellung des Kraftschlusses in Richtung der Schaftlängsachse gemäß den Pfeilen IV an der zugewandten Stirnfläche 5 des Schaftes festgespannt wird.

Zur Herstellung des Formschlusses besitzt die dem Kopf zugewandte Stirnfläche 5 des Schaftes zwei Paare von Teilflächen 6, 7, 8, 9, die zueinander konvergieren, wobei sie einen zum Kopf 2 hin vorspringenden spitzwinkligen Vorsprung bilden, der im Querschnitt die Kontur eines gleichschenkligen Dreiecks hat (vgl. Fig. 1) und sich über die gesamte Schafttiefe erstreckt (vgl. Fig. 2, die Traglinie 10, und Fig. 1, die Spitze 10). Diesen Teilflächen 6, 7, 8, 9 ist eine entsprechende Anzahl von korrespondierenden Gegenflächen 11, 12, 13, 14 an der dem Werkzeughalterschaft 1 zugewandten Stirnfläche 15 des Kopfes 2 zugeordnet. Auch hier sind zwei Paare von korrespondierenden Gegenflächen vorgesehen, die den Teilflächenpaaren gegenüberliegen. Die beiden Flächen eines Gegenflächenpaares an der Stirnfläche des Kopfes bilden einen den entsprechenden Vorsprung am Schaft 1 aufnehmenden Rücksprung oder eine entsprechende Vertiefung, die nach Querschnitt, Abmessungen und Verlauf das genaue Negativ zu dem Vorsprung am Schaft bildet. Die einander korrespondierenden Teilflächen 6, 7 bzw. 8, 9 am Werkzeughalterschaft 1 und Gegenflächen 11, 12 bzw. 13, 14 am Kopf liegen beim zusammengebauten Werkzeughalter so aneinander an, daß sich die einander zugewandten Stirnflächen der beiden Teile ineinander verzahnen.

Zur Herstellung des Kraftschlusses ist bei der Ausführungsform nach Fig. 1 und 2 in einer Längsbohrung 20 des Werkzeughalterschaftes ein Spannbolzen 21 in axialer Richtung gemäß den Pfeilen IV hin und her verstellbar und feststellbar geführt, an dessen dem Kopf 2 abgewandten Ende die Betätigungsorgane zur Erzeugung der Verstellbewegung des Schaftes angreifen und dessen anderes Ende an dem dem Kopf 2 zugewandten Ende des Werkzeughalterschaftes vorsteht und als Formstück 22 ausgebildet ist, das bei zusammengebautem Werkzeughalter in eine entsprechend gestaltete Aufnahme 23 an dem dem Schaft zugewandten Endbereich des Kopfes sitzt. Das Formstück 22 am Ende des Spannbolzens 21 stellt mit dessen Schaft 25 ein im Querschnitt etwa T-förmiges Gebilde dar (vgl. Fig. 1 und 2), während die zugeordnete Aufnahme 23 im Querschnitt ebenfalls T-förmig ist und nach Querschnitt, Abmessungen und Verlauf das genaue Negativ am Kopf bildet, wobei ihre zum Werkzeughalterschaft hin offene Partie dem Steg des T entspricht. Die beiden spitzwinkligen Vorsprünge 6—7 und 8—9 an der dem Kopf 2 zugewandten Stirnfläche 5 des Werkzeughalterschaftes 1 sind zu beiden Seiten des Spannbolzenschaftes 25 in symmetrischer Anordnung zu diesem und zur Längsachse 4 des Werkzeughalterschaftes angeordnet, wie insbesondere aus Fig. 1 hervorgeht.

Zum Zusammensetzen des Werkzeughalterschaftes 1 und des Kopfes 2 wird zunächst der Kopf in der Ansicht und Darstellungsweise gemäß Fig. 2 gemäß Pfeil 30 nach rechts bewegt, sodann wird er gemäß Pfeil 31 nach oben angeführt, bis die Aufnahme 23 dem Kopf 2 gegenüberliegt und die Rücksprünge 11—12 und 13—14 den Vorsprüngen 6—7 und 8—9 am Schaft gegenüberliegen, anschließend wird der Kopf gemäß Pfeil 32 zurückgeführt und hierbei an den Werkzeugschaft angesetzt. Es ergibt sich somit eine leichte und einfache Handhabung und Montage, die bedienungsfreundlich und human ist, bei alledem ist der Aufbau einfach und kostengünstig, werkstoffsparend, er gewährleistet eine sichere Funktion bei größtmöglicher Stabilität.

Um sicherzugehen, daß beim Ansetzen des Kopfes am Werkzeugschaft größtmögliche Genauigkeit erreicht wird, ist die Aufnahme 23, die aus einem Teil 23a kleinerer Breite und einem Teil 23b größerer Breite besteht, an einer Seite durch einen Endanschlag 33 für das Einführen von oben des Formstücks am Spannbolzen in die Aufnahme abgeschlossen, der in Richtung der Bewegung beim Einführen des Formstücks am Spannbolzen (Pfeil 32) verstellbar ist und zu diesem Zweck durch das freie Schaftende 33a einer Schraube gebildet wird, die in einer die Aufnahme seitlich abschließenden Wand 33b des Kopfes hin und her schraubbar geführt ist.

Die Erzeugung der Spannbewegung zum Herstellen des Kraftschlusses kann in verschiedenen Arten geschehen, es ist oben bereits erwähnt worden, daß man dies mechanisch, hydraulisch, pneumatisch oder elektrisch usw. vornehmen kann. In der Zeichnung sind zwei Varianten für das mechanische Zusammenspannen des Werkzeughalterschaftes mit dem Kopf dargestellt.

Bei der Variante nach Fig. 1 und 2 ist dem Werkzeughalterschaft 1 eine von außen zu betätigende Spannschraube 35 zugeordnet, deren Längsachse 36 rechtwinklig zur Längsachse 4 des Schaftes des Werkzeughalters verläuft und deren vorderes Ende 37 mit konischen Gegenflächen 38a, 38b einer Ausnehmung 39 am Spannbolzen 21 zusammenwirkt, derart, daß bei Niederschrauben der Spannschraube gemäß Pfeil 40 eine axiale Verstellbewegung des Spannbolzens in Richtung des Pfeiles IV erzeugt wird. Die symmetrisch mit Bezug auf die Schraubenlängsachse 36 vorgesehenen konischen Gegenflächen 38a und 38b, denen konische Flächen 41a und 41b am freien Ende 37 der Spannschraube zugeordnet sind, konvergieren in Richtung zur Schraubenlängsachse zueinander.

Wenn also die Spannschraube 35 eingeschraubt wird, wird der Spannbolzen nach oben gezogen, was zur Folge hat, daß das Formstück 22 in der Ausnehmung 23 kraftschlüssig den Kopf mit dem Werkzeughalterschaft verbindet.

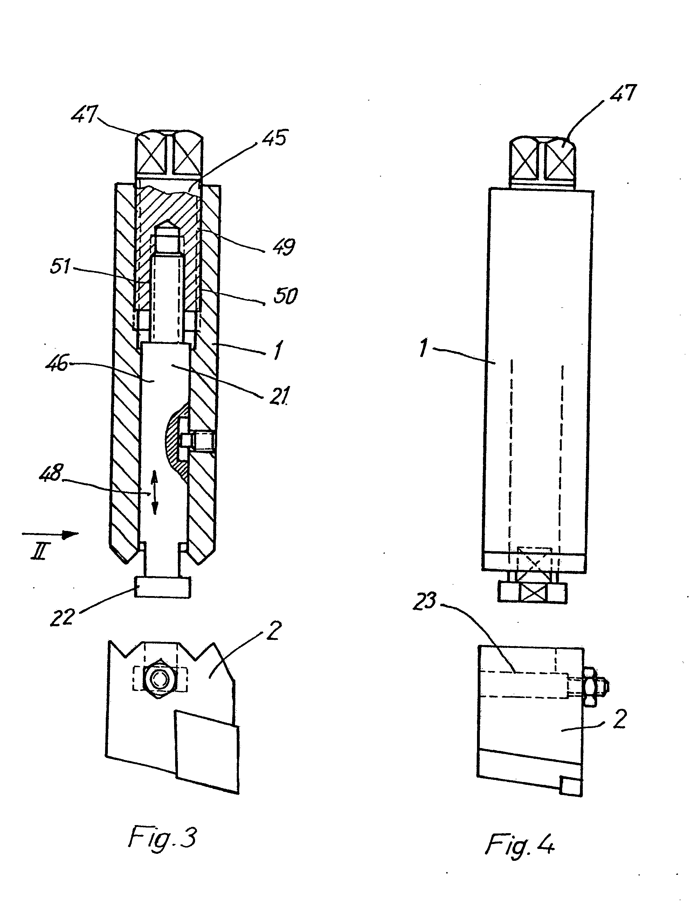

Bei der in Fig. 3 und 4 gezeigten Variante ist der Schaft 1 des Werkzeughalters und der Kopf 2 genau wie bei der Anordnung nach Fig. 1 und 2 ausgebildet, auch hier haben wir einen Spannbolzen 21 und ein Formstück 22 an diesem, dem eine Aufnahme 23 am Kopf 2 zugeordnet ist. Bei dieser Variante sind jedoch die Betätigungsorgane zum Erzeugen der Festspannbewegung anders ausgebildet, wenngleich sie ebenfalls mechanisch wirken. Der Spannbolzen 21 besteht nämlich in diesem Falle aus einem Betätigungsende 45 und einer mit diesem verschraubten, das Formstück 22 tragenden Partie 46 und ist insgesamt als Differenzgewindestück ausgebildet, derart, daß bei Verdrehen der aus dem Werkzeughalterschaft herausstehenden Partie 47 des Betätigungsendes 45 das Formstück 22 am anderen Spannbolzenende gemäß Pfeil 48 axial verstellt wird. Zu diesem Zweck ist das Betätigungsende 45 mit Außengewinde 49 versehen und hierbei in einer Gewindepartie 50 der Aufnahmepartie des Werkzeughalterschaftes 1 hin- und herschraubbar geführt und außerdem an der dem Kopf zugewandten Seite mit einer Sackbohrung 51 versehen, die ein Innengewinde aufweist, dessen Steigung von derjenigen des Außengewindes verschieden ist und in die das mit entsprechendem Außengewinde versehene Ende der das Formstück tragenden Partie eingeschraubt ist. Es ergibt sich also eine Differenzgewindeanordnung, mit deren Hilfe die Verdrehbewegung beim Betätigen der Partie 47 in eine axiale Verstellbewegung gemäß den Pfeilen 48 des Formstücks 22 umgewandelt wird, wodurch das Formstück in die Aufnahme 23 eingreift, Schaft 1 und Kopf 2 zusammengespannt und hierbei die kraftschlüssige Verbindung zwischen beiden Teilen erzeugt.

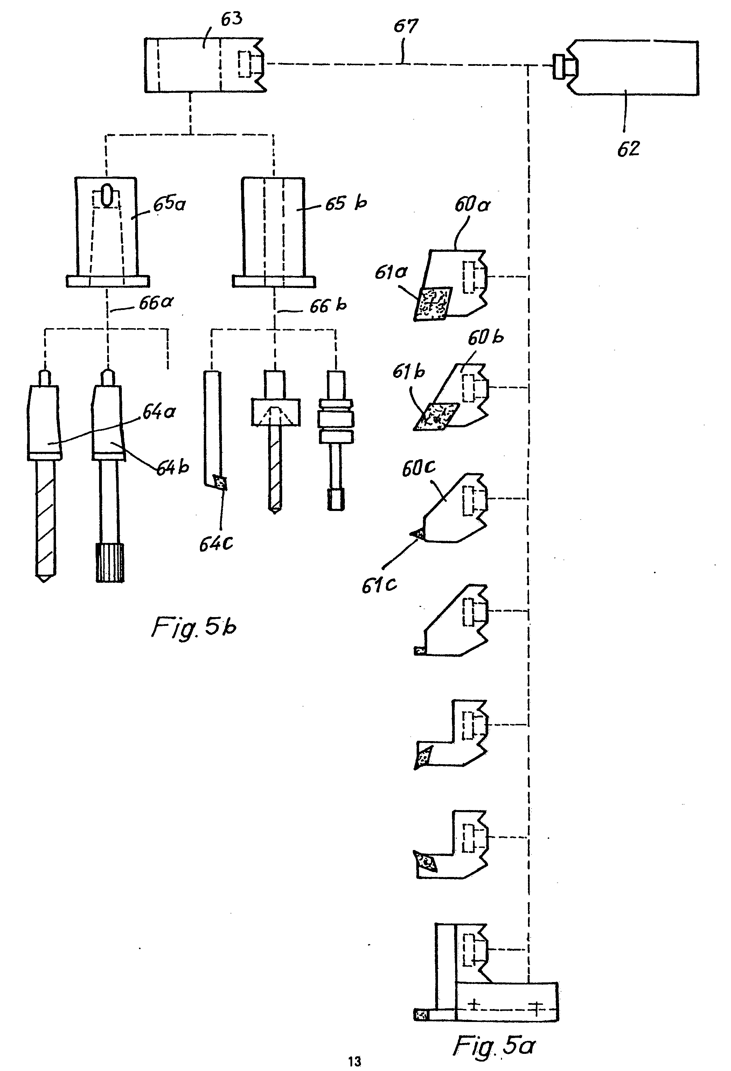

Fig. 5a zeigt in Zusammenhang mit Fig. 5b die vielseitigen Anwendungsmöglichkeiten des Erfindungsgegenstandes. In Fig. 5a sind verschiedene Köpfe 60a, 60b, 60c usw. dargestellt, die jeweils unmittelbar den als Schneideinsatz ausgebildeten Werkzeugeinsatz 61a, 61b, 61c usw. tragen und die mit dem Schaft 62 zusammengespannt werden können in der oben beschriebenen Weise. Bei der in Fig. 5b dargestellten Anordnung ist zwischen dem Kopf 63, der wiederum an den Schaft 62 ansetzbar ist, und dem Werkzeugeinsatz 64a, 64b, 64c usw., der z. B. zum Bohren, Innenbohren, Gewindeschneiden usw. geeignet sein kann, ein Träger 65a bzw. 65b zwischengeschaltet, dessen mit der Achse des Werkzeugeinsatzes zusammenfallende Achse 66a, 66b rechtwinklig zur Längsachse 67 des Werkzeughalterschaftes verläuft. Auf diese Weise ist dargestellt, daß Werkzeuge zur Außen- und/oder Innenbearbeitung in der Grundstellung des erfindungsgemäßen Halters einfach und zuverlässig eingespannt werden können.

**Patentansprüche**

1. Schnellwechselwerkzeughalter, insbesondere für Drehmaschinen, der einen an der Maschine anzubringenden Schaft (1, 62) und einen an diesem lösbar befestigten Kopf (2, 60a, b, c, 63) besitzt, an dem der Werkzeugeinsatz (3, 61a, b, c), z. B. ein Schneideinsatz, auswechselbar angebracht ist und der an der zugehörigen Stirnfläche des Schaftes (1, 62) unter mehrseitigem Formschluß anliegt und mit dem Schaft (1, 62) durch Kraftschluß lösbar verbunden ist, zweckmäßigerweise mechanisch, hydraulisch, pneumatisch oder elektrisch zusammenspannbar ist, indem in einer Längsbohrung (20) des Werkzeughalterschaftes (1, 62) ein Spannbolzen (21) in axialer Richtung hin und her verstellbar und feststellbar geführt ist, an dessen dem Kopf (2, 60a, b, c, 63) abgewandten Ende die Betätigungsorgane zur Erzeugung der Verstellbewegung des Schaftes (1, 62) angreifen und dessen anderes Ende an dem Kopf (2, 60a, b, c, 63) zugewandten Ende des Schaftes (1, 62) vorsteht und als Formstück (22) ausgebildet ist, das bei zusammengebautem Werkzeughalter in einer entsprechend gestalteten Aufnahme (23) an dem dem Schaft (1, 62) zugewandten Endbereich des Kopfes (2, 60a, b, c, 63) sitzt, wobei zur Herstellung des Formschlusses die dem Kopf (2, 60a, b, c, 63) zugewandte Stirnfläche des Werkzeughalterschaftes (1, 62) zueinander konvergierende Teilflächen (6, 7; 8, 9) besitzt, denen eine entsprechende Anzahl von korrespondierenden Gegenflächen (11, 12; 13, 14) an der dem Schaft (1, 62) zugewandten Stirnfläche des Kopfes (2, 60a, b, c, 63) zugeordnet ist, dadurch gekennzeichnet, daß die dem Kopf (2, 60a, b, c, 63) zugewandte Stirnfläche des Schaftes (1, 62) des Werkzeughalters zwei Paare von konvergierenden Teilflächen (5, 6; 7, 8) aufweist, die jeweils einen zum Kopf hin vorstehenden, sich rechtwinklig zur Schaftlängsachse (4, 67) über die gesamte Schafthöhe erstreckenden spitzwinkligen Vorsprung mit einem Querschnitt in Gestalt eines gleichschenkligen Dreiecks bilden, daß das Formstück (22) am Spannbolzen ein im Querschnitt etwa T-förmiges Gebilde darstellt und die zugehörige Aufnahme (23) im Kopf (2, 60a, b, c, 63) im Querschnitt ebenfalls etwa T-förmig ist, wobei ihre zum Schaft (1, 62) hin offene Partie dem Steg des T entspricht, und daß die die Aufnahme bildende T-förmige Nut (23) an der Oberseite des Kopfes (2, 60a, b, c, 63) durch eine Wand (33b) abgeschlossen ist.

2. Schnellwechselwerkzeughalter nach Anspruch 1, dadurch gekennzeichnet, daß der Spannbolzen (21) aus einem Betätigungsende (45) und einer mit diesem verschraubten, das Formstück (22) tragenden Partie (46) besteht und als Differenzgewindestück ausgebildet ist, an dem das Betätigungsende (45) mit Außengewinde (49) versehen und in einer Gewindepartie (50) der Aufnahmepartie des Werkzeughalterschaftes (1) hin und her schraubbar geführt ist und außerdem an der dem Kopf (2) zugewandten Seite eine Sackbohrung (51) mit einem Innengewinde mit einer von derjenigen des Außengewindes (49) verschiedenen Steigung aufweist, in die das mit entsprechendem Außengewinde versehene Ende der das Formstück (22) tragenden Partie (46) eingeschraubt ist, derart, daß bei Verdrehen der aus dem Werkzeughalterschaft (1, 62) herausstehenden Partie des Betätigungsendes (45) das Formstück (22) am anderen Spannbolzenende axial verstellbar ist.

3. Schnellwechselwerkzeughalter nach Anspruch 1 oder 2, dadurch gekennzeichnet, daß dem Werkzeughalterschaft (1, 62) eine von außen zu betätigende Spannschraube (35) zugeordnet ist, deren Längsachse (36) rechtwinklig zur Schaftlängsachse (4, 67) verläuft und deren konisch zulaufendes freies Ende (37) mit entsprechend verlaufenden symmetrisch mit Bezug auf die Schraubenlängsachse (40) vorgesehenen konischen Gegenflächen (38a, 38b) einer Ausnehmung (39) am Spannbolzen (21) zusammenwirkt, derart, daß bei Niederschrauben der Spannschraube (35) eine axiale Verstellbewegung des Spannbolzens (21) erzeugt wird.

4. Schnellwechselwerkzeughalter nach Anspruch 1 bis 3, dadurch gekennzeichnet, daß am Kopf (60a, b, c) unmittelbar der als Schneideinsatz ausgebildete Werkzeugeinsatz (61a, b, c) befestigt ist oder daß zwischen dem Kopf (63) und dem Werkzeugeinsatz (64a, b, c) ein Träger (65a, b) zwischengeschaltet ist, dessen mit der Achse des Werkzeugeinsatzes zusammenfallende Achse (66a, b) rechtwinklig zur Achse (67) des Werkzeughalterschaftes verläuft.

**Claims**

1. A quick change tool holder, in particular for use on lathes, comprising a shank (1, 62) to be mounted on the machine and a head (2, 60a, b, c, 63) detachably mounted to said shank, to which the tool (3, 61a, b, c), e. g. a cutter, is attached in a manner to permit change, the head resting positively against the associated face to the shank (1, 62) while being frictionally and detachably connected to the shank (1, 62), clamping being achieved by mechanical, hydraulic, pneumatic or electrical means by provision of a clamping bolt (21) guided movably and lockably in a longitudinal bore (20) of the tool holder shank (1, 62), the actuating elements for shank traverse acting on the bolt end remote from the head (2, 60a, b, c, 63) while the other end projects from the end of the shank (1, 62) adjacent to the head (2, 60a, b, c, 63) and is designed as a shaped part (22) engaging, on assembly of the tool holder, a corresponding recess (23) in the end section of the head (2, 60a, b, c, 63) which is adjacent to the shank (1, 62), positive locking being achieved by means of converging partsurfaces (6, 7, 8, 9) of the shank face adjacent to the head (2, 60a, b, c, 63), which are matched by a corresponding number of mating surfaces (11, 12, 13, 14) of the head face adjacent to the shank (1, 62), wherein the face of the shank (1, 62) adjacent to the head (2, 60a, b, c, 63) of the tool holder is provided with two pairs of converging partsurfaces (5, 6, 7, 8) , each forming an acute projection towards the head extending at a right angle to the longitudinal shank axis (4, 67) along the entire height of the shank and having the shape of an isoceles triangle, wherein the shaped part (22) at the clamping bolt has an approximately T-shaped cross-section, the associated recess (23) in the head (2, 60a, b, c, 63) also having an approximately T-shaped cross-section, the part which is open towards the shank (1) representing the stem of the T, and wherein the T-shaped groove (23) is closed by a wall (33b) at the top of the head (2, 60a, b, c, 63).

2. A quick change tool holder as described in claim 1, wherein the clamping bolt (21) consists of an operating end (45) and a section (46) bolted on to the operating end and carrying the shaped part (22) and forms a differential threaded part, the operating end (45) having a male thread (49) capable of being screwed into and out of a threaded section (50) of the recessed part of the tool holder shank (1), while the end adjacent to the head (2) has a threaded bore (51), the thread pitch differing from that of the male thread (49), into which the end of the section (46) carrying the shaped part (22) and having the corresponding male thread is screwed, so that the shaped part (22) at the end of the clamping bolt can be adjusted by turning the section of the operating end (45) which projects from the tool holder shank (1, 62).

3. A quick change tool holder as described in claim 1 or 2, wherein an externally actuated clamping screw (35) is allocated to the tool holder shank (1, 62), the longitudinal axis (36) of the clamping screw extending at a right angle in relation to the longitudinal axis (4, 67) of the shank, while its tapered free end (37) acts in conjunction with corresponding conical surfaces (38a, 38b) arranged symmetrically in relation to the longitudinal screw axis (40) and forming a recess (39) in the clamping bolt (21), so that the clamping bolt (21) is axially adjusted by tightening the clamping screw (35).

4. A quick change tool holder as described in any of claims 1 to 3, wherein the cutting tool (61a, b, c) is directly attached to the head (60a, b, c) or wherein a carrying element (65a, b) is located between the head (63) and the tool (64a, b, c), its axis (66a, b) coinciding with the tool axis and extending at a right angle relative to the holder axis (67).

**Revendications**

1. Porte-outil à échange rapide, en particulier pour machines à tourner, qui présente une tige (1, 62) à disposer sur la machine et une tête (2, 60a, b, c, 63) fixée de façon détachable à cette tige, et sur laquelle est disposé de façon interchangeable l'outil rapporté (3, 61a, b, c), par exemple un grain rapporté, et qui s'applique contre la face frontale correspondante de la tige (1, 62) avec encastrement multilatéral et est reliée à la tige (1, 62) de façon détachable sous l'action d'une force et peut être tendue, de préférence mécaniquement, hydrauliquement, pneumatiquement ou électriquement, par le fait que dans une perforation longitudinale (20) de la tige de porte-outil (1, 62) est guidé, de manière à pouvoir être réglé en direction axiale dans un sens et dans l'autre et à pouvoir être bloqué, un boulon de serrage (21), dont l'extrémité opposée à la tête (2, 60a, b, c, 63) subit l'action des organes d'actionnement servant à engendrer le mouvement de réglage de la tige (1, 62), et dont l'autre extrémité dépasse à l'extrémité de la tige (1, 62) qui est tournée vers la tête (2, 60a, b, c, 63) et est conçue sous forme de pièce façonnée (22) qui, lorsque le porte-outil est assemblé, est placée dans un logement de forme correspondante (23) de la région terminale de la tête (2, 60a, b, c, 63), tournée vers la tige (1, 62), la surface frontale de la tige de porte-outil (1, 62) qui est tournée vers la tête (2, 60a, b, c, 63) présentant, pour la réalisation de l'encastrement, des surfaces partielles (6, 7; 8, 9) qui convergent l'une vers l'autre et auxquelles est adjoint un nombre correspondant de surfaces complémentaires correspondantes (11, 12; 13, 14), sur la surface frontale de la tête (2, 60a, b, c, 63) qui est tournée vers la tige (1, 62), caractérisé par le fait que la surface frontale de la tige du porte-outil qui est tournée vers la tête (2, 60a, b, c, 63) présente deux paires de surfaces partielles convergentes (5, 6; 7, 8) qui forment chaque fois une saillie à angle aigu s'avançant en direction de la tête, s'étendant perpendiculairement à l'axe longitudinal (4, 67) de la tige sur toute la hauteur de la tige et ayant une section en forme de triangle équilatéral, que la pièce façonnée (22) prévue sur le boulon de serrage constitue une structure à peu près en T dans sa section et que le logement correspondant (23) de la tête (2, 60a, b, c, 63) est également à peu près en T dans sa section, sa partie ouverte en direction de la tige (1, 62) correspondant à l'âme du T, et que la gorge en forme de T (23) formant le logement est fermée, au côté supérieur de la tête (2, 60a, b, c, 63), par une pario (33b).

2. Porte-outil à échange rapide selon la revendication 1, caractérisé par le fait que le boulon de serrage (21) est formé d'une extrémité d'actionnement (45) et d'une partie (46) vissée à celle-ci et portant la pièce façonnée (22) et est conçu sous forme de pièce à filetage différentiel sur laquelle l'extrémité d'actionnement (45) est munie d'un filetage extérieur (49) et est guidée de manière à pouvoir se visser et se dévisser dans une partie filetée (50) de la partie de logement de la tige de porte-outil (1) et présente, en outre, au côté tournée vers la tête (2), une perforation borgne (51) munie d'un filetage intérieur à pas différent de celui du filetage extérieur (49), dans lequel est vissée l'extrémité, minie d'un filetage extérieur correspondant, de la partie (46) portant la pièce façonnée (22), de telle sorte que lorsqu'on fait tourner la partie de l'extrémité d'actionnement (45) qui dépasse hors de la tige de porteoutil (1, 62), la pièce façonnée (22) de l'autre extrémité du boulon de serrage peut être réglée axialement.

3. Porte-outil à échange rapide selon l'une des revendications 1 et 2, caractérisé par le fait qu'à la tige de porte-outil (1, 62) est adjointe une vis de serrage (35) pouvant être actionnée de l'extérieur, dont l'axe longitudinal (36) est dirigé perpendiculairement à l'axe longitudinal (4, 67) de la tige et dont l'extrémité libre (37), se terminant coniquement, coopère avec des surfaces complémentaires coniques (38a, 38b), prévues symétriquement par rapport à l'axe longitudinal (40) de la vis, d'un évidement (39) du boulon de serrage (21), de telle sorte que lorsqu'on visse vers le bas la vis de serrage (35), un mouvement axial de réglage du boulon de serrage (21) est engendré.

4. Porte-outil à échange rapide selon les revendications 1 à 3, caractérisé par le fait qu'à la tête (60a, b, c) est fixé directement l'outil rapporté (61a, b, c) conçu sous forme de grain rapporté, ou qu'entre la tête (63) et l'outil rapporté (64a, b, c) est interposé un support (65a, b), dont l'axe (66a, b), coïncidant avec l'axe de l'outil rapporté, est dirigé perpendiculairement à l'axe (67) de la tige de porte-outil.

Fig. 1

Fig. 2

Fig. 3

Fig. 4

11

Fig. 5b

Fig. 5a

13